Europäisches Patentamt

European Patent Office

Office européen des brevets

(19)

(11) Publication number: **0 261 897 B1**

(12) **EUROPEAN PATENT SPECIFICATION**

(45) Date of publication of patent specification: **19.08.92**    (51) Int. Cl.⁵: **G09G 3/36**, H04N 3/12

(21) Application number: **87308310.9**

(22) Date of filing: **18.09.87**

(54) **Display device.**

(30) Priority: **20.09.86 GB 8622711**

(43) Date of publication of application:
**30.03.88 Bulletin 88/13**

(45) Publication of the grant of the patent:
**19.08.92 Bulletin 92/34**

(84) Designated Contracting States:
**AT BE CH DE ES FR GB GR IT LI LU NL SE**

(56) References cited:
**EP-A- 0 193 728**
**GB-A- 2 164 776**
**US-A- 4 006 298**
**US-A- 4 378 568**
**US-A- 4 559 535**

(73) Proprietor: **THORN EMI plc**
**4 Tenterden Street**
**London W1R 9AH(GB)**

(72) Inventor: **Green, Ian McDonald**
**"Westwood" High Street**
**Buckie Banffshire Scotland(GB)**

(74) Representative: **Hurst, Richard Arthur Alexander et al**
**THORN EMI Patents Limited, Central Research Laboratories, Dawley Road**
**Hayes, Middlesex UB3 1HH(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

The present invention relates to a display device, and particularly but not solely to one which utilises liquid crystal display elements.

A conventional liquid crystal display has a lattice of liquid crystal display elements each with its own driver and storage capacity to enable activation independently of the other elements. The on/off period of each element can be modulated in order to provide a number of intensity levels of display at that element.

Furthermore, a display device such as that disclosed in US-A- 4,559,535 displays information with multiple shades of a colour on a thin film electroluminescent matrix display panel. Light is emitted by the display elements themselves.

The present invention provides a display device comprising:

a lattice of bi-stable light transmissive elements;

input means to input a signal representing the display information for one picture to a store;

output means to output, from the store, the display information for one picture in sections, each section consisting of corresponding portions of display information for all the bi-stable light transmissive elements;

a plurality of drivers, each allocated to a row or column of the lattice, to set each display element to a condition in accordance with its respective portion of said each section;

the device characterised in that there is included means to produce a light output for transmission through the lattice;

and means to modulate the light output in accordance with the significance of said each section.

In this way, the display device does not require a driver for each element, thereby providing a substantial simplification in the arrangement of constituent components of the device, and enabling multiplexed operation of the display device.

Preferably, the signal for one picture comprises a sequence of words(for example each of 8 bits), each one corresponding to the display information for a transmissive element, and the output means has to take out, from the store, the first bit in each word and pass them sequentially to the lattice, and then to take out, from the store, the second bit in each word and pass them sequentially to the lattice, this operation being repeated until all the bits have been so processed.

As the bits in a given position (e.g. first) in the display word reach the drivers, they set each pixel to the corresponding condition. Once the entire lattice has been set in accordance with a given bit-position, the light-modulation means can be activated to output light in accordance with the given bit-position; thus, for example, if the given bit-position is the first bit in the word and this is designated as the most-significant-bit, then the light output with the elements in this condition is accordingly a substantial fraction of the total output. The light output for the most-significant-bit setting may be double that for the second-most-significant-bit setting, which is itself double that for the third-most-significant-bit setting, and so on. The light modulation means may have means to regulate the intensity of the light output in accordance with the given bit-position, and/or means to regulate the duration of light output in accordance with the given bit-position.

Preferably the display device may have means to blank the elements during setting of the elements for a given bit position.

For a colour display, preferably the display device has a lattice formed of groups of three transmissive elements, each of the elements in a group producing a different colour and being set separately.

In an alternative arrangement, the lattice is formed of single transmissive elements, each of which is exposed to light of the three colours sequentially, a transmissive element being re-set after each exposure.

The present invention also provides a method of operating a grey-scale display device having a lattice of bi-stable light transmissive elements, the method comprising:-

inputting a signal representing the display information for one picture, to a store;

outputting from the store a first section of the display information for one picture, the first section consisting of corresponding portions of display information for all the bi-stable light transmissive elements;

using a plurality of drivers, each allocated to a row or column of the lattice, to effect setting of each light transmissive element to a condition in accordance with its respective portion of the first section;

characterised by producing a light output for transmission through the lattice, once the light transmissive elements are set, the light output being modulated in accordance with the significance of the first section;

outputting from the store a second section of the display information, the second section consisting of corresponding other portions of display information for all the light transmissive elements, and effecting the setting and modulating operations for the second section;

and repeating the outputting, setting and modulating operations on any further sections.

Preferably, the signal comprises an 8-bit word for each light transmissive element, and the bits, of a predetermined significance, if the words are first output from the store for setting and display, and thereafter the bits, of another significance, of the words are output from the store for setting and display, the total light output being of an appropriate ratio to the previous output, this sequence being repeated until all the bits have been displayed.

Preferably, modulation of the light output is achieved by regulation of the light intensity and/or of the duration of light output.

Preferably, each row and column of the lattice has a separate driver. Alternatively, each column has a separate driver, and some or all the rows have a common driver.

Preferably, a display element comprises a selectively settable liquid crystal cell.

The present invention is applicable to many forms of displays, for example to one in which the image is presented at a surface of a liquid crystal panel backlit by fluorescent tubes, or to one in which the image is projected onto a screen by means of a liquid crystal panel positioned in the path of a light beam. Also, the present invention is applicable to colour displays and to black-and-white displays.

In order that the invention may more readily be understood, a description is now given, by way of example only, reference being made to the sole accompanying drawings in which:

Figure 1 is a block diagram of a display device embodying the present invention;

Figure 2 is another block diagram of a display device embodying the present invention; and

Figure 3 shows a pixel arrangement for a display device embodying the present invention.

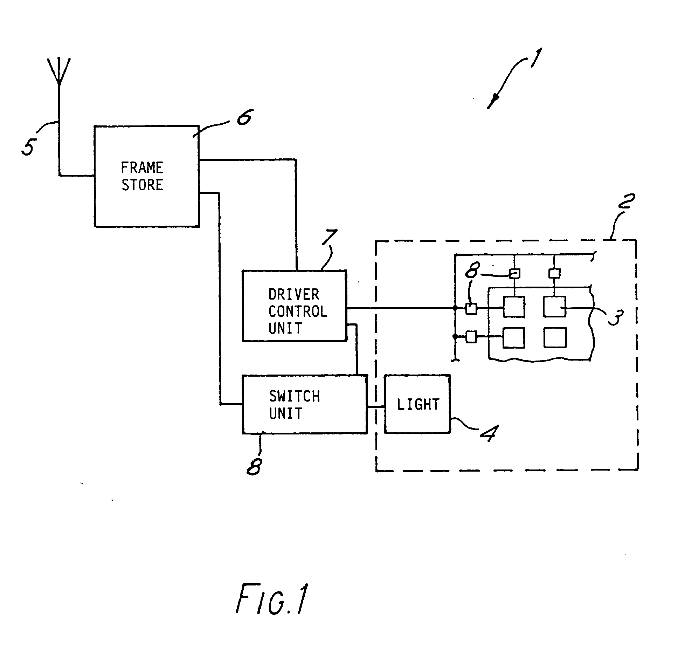

The television receiver 1 of Figure 1 has a liquid crystal display 2 formed of a lattice of display elements 3 made from liquid crystal material, each element being individually actuable. The lattice of elements 3 is backlit by a number of fluorescent tubes 4 whose light intensity and duration of operation can be controlled.

The video signal for input to television receiver has a 70Hz scan rate providing a scan period of 14mS, and includes in each picture of display information an 8-bit word for each display element, a word beginning with the most-significant-bit and ending with the least-significant-bit. When this signal is input to receiver 1 via its aerial 5, one picture of display information passes to a frame store 6.

In the processing for the display of the most-significant-bits of the word, frame store 6 outputs the first bit of each word and sends the bits to a control unit 7 for an array of drivers 8, one being assigned to each row and column of the lattice. The driver array sets each element to the condition (on or off) appropriate to its most-significant-bit. Once the array of drivers 8 has set all the elements (which takes less than 1mS), driver control unit 7 instructs light switch unit 9 which checks the relevant bit-position (in this case the most-significant-bit) and then activates the fluorescent tubes 4 for a time duration of 3mS and at an intensity to provide an appropriate output.

When the required output has been achieved then the light switch unit 9 de-activates the tubes 4 and instructs frame store 6 which proceeds to output the secondmost-significant bits to driver control unit 7 thereby to set all the elements for this bit-position. On this occasion, light switch unit 9 activates the tubes half as long as before (namely 1.5mS) at the same intensity to provide only half the output as that for the most-significant bits. This routine is repeated for all eight bits of the words, the light output being halved each time. Once the least significant bit has been displayed (the light output time duration being 25 S), the store 6 is emptied and the next picture of display information is output and the processing described above is repeated.

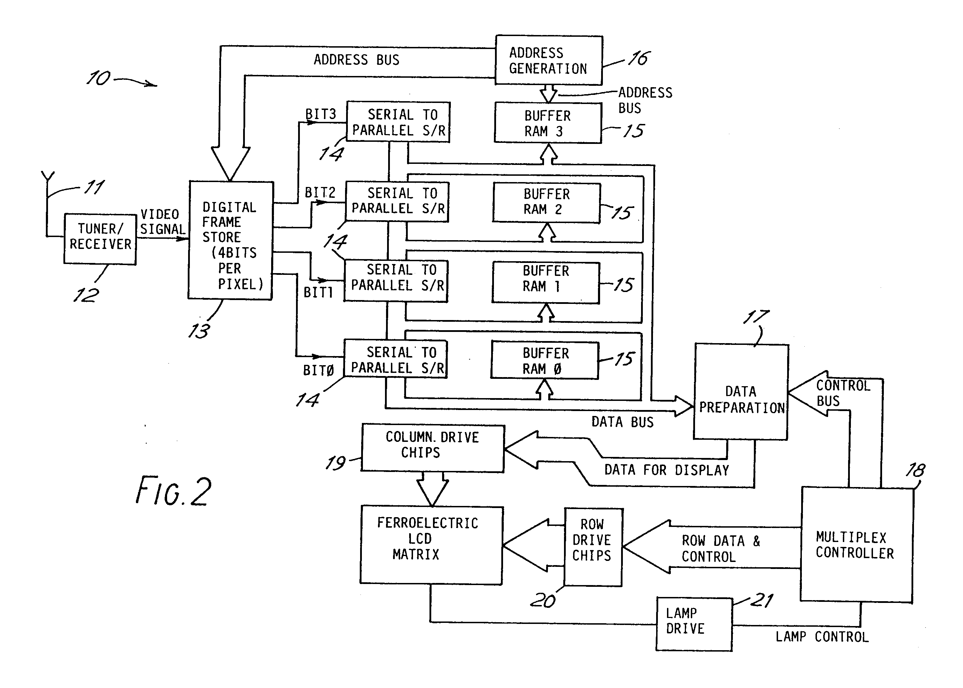

Figure 2 is a block diagram of a system 10 for displaying off-air video pictures on a bistable display, such as a ferroelectric liquid crystal display panel. Video information is received at aerial 11 and demodulated by the receiver 12; it is then digitized (four bits per pixel) and held in the digital frame store 13.

To display one video frame, firstly the data is split into four streams (one for each bit) and compressed by shift registers 14 so each byte contains data for 8 pixels. The data is then loaded into four buffer RAMs 15, so each RAM now contains one frame of video information 1 bit deep. Accessing of the RAMs 15 and the frame store is done under control of the address generator 16.

For the sequential greyscale processing the data must be sent to the display one bit at a time, i.e. firstly all the data from RAM 0 is sent to the display (the least significant bit), then followed in turn by each of the other 3 RAMs. Also, in order to write data to the light crystal display panel each line of data must be presented in a manner determined by the multiplexing scheme; this processing is performed by the data preparation block 17. Data is now in a form in which it can be sent to the display panel under control of the multiplex controller block 18, each line of data being latched into the column drive chips 19 while rows are strobed by the low drive chips 20. This results in the data being latched into the display. After a full screen of data has been written, the backlight is flashed for a length of time corresponding to the significance of the bit being displayed. This is done by the lamp drive circuit 20 under control of the multiplex controller 18.

The sequence of events which results in a full picture with sixteen grey levels being displayed, is as follows:-

1. Load frame store 13;

2. Load buffer RAMs 15, one significant bit to each;

3. Load data from buffer RAM 0 line into data preparation unit 17;

4. Load data from buffer RAM 1 line by line into data preparation unit 17;

5. Load data from buffer RAM 2 line by line into data preparation unit 17;

6. Load data from buffer RAM 3 line by line into data preparation unit 17;

7. Multiplex controller 18 sends data from preparation unit 17 to column drive chips 19 and controls row drive chips 20;

8. When data from RAM 0 has been latched into the display (i.e. when the least significant bit for the frame is being presented), the multiplex controller 18 signals the lamp drive to flash for a period of time A mS;

9. Data from RAM 1 is now latched and the backlight flashed for 2A mS;

10. Data from RAM 2 is now latched and the backlight flashed for 4A mS;

11. Data from RAM 3 is now latched and the backlight flashed for 8A mS;

12. The picture has now been displayed.

Assuming a frame time of 40 mS, then if it takes T mS to set up the display 4T + 15A = 40 mS.

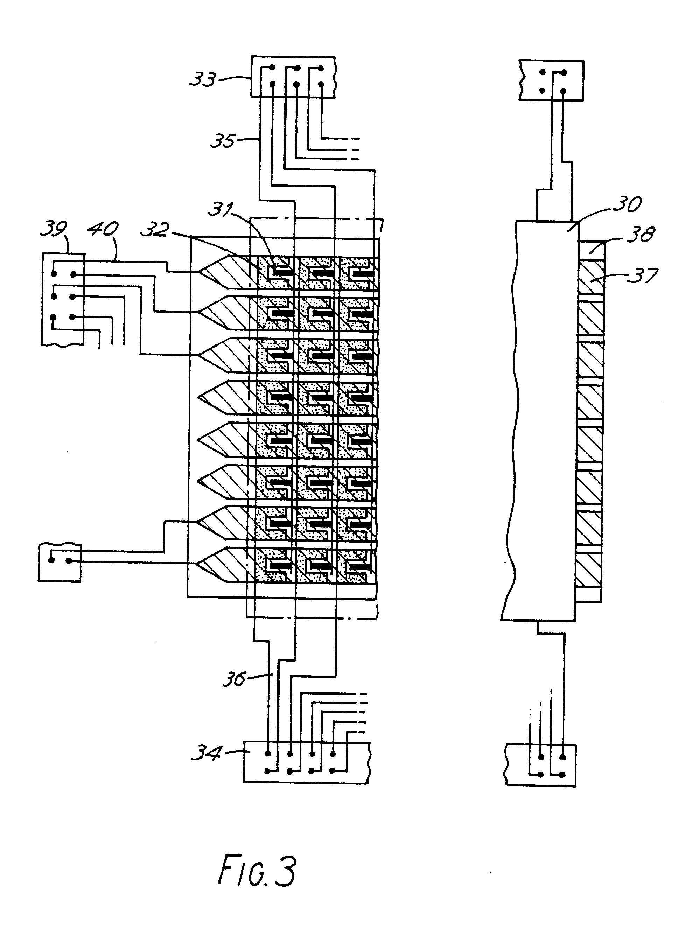

Figure 3 shows an arrangement of metallisation patterns for a liquid crystal display panel to achiev a two-bit greyscale, for use additionally or alternatively to the greyscale processing of Figures 1 and 2. On the substrate 30 having the column electrodes, the ITO metallisation patterns are such that each pixel has two sections 31, 32 which can be separately driven from appropriate drive chips (not shown) on flexible pcb boards 33 and 34 via lines 35 and 36 respectively. For each pixel, section 31 corresponds to the least-significant-bit, and section 32 to the most-significant-bit. The row electrodes are formed by ITO metallisation strips 37 on substrate 38, which can be strobed by row drive chips (not shown) on flexible pcb 39 via lines 40. In Figure 3, on the left hand side the substrate has been omitted as indicated by the broken-chain line yet the column metallisation is shown overlying the row metallisation, for the purpose of simplicity.

## Claims

1. A display device (2) comprising:

a lattice of bi-stable light transmissive elements (3);

input means (5) to input a signal representing the display information for one picture to a store (6);

output means to output, from the store (6), the display information for one picture in sections, each section consisting of corresponding portions of display information for all the bi-stable light transmissive elements (3);

a plurality of drivers (8), each allocated to a row or column of the lattice, to set each bi-stable light transmissive element (3) to a condition in accordance with its respective portion of said each section;

the device characterised in that there is included means (4) to produce a light output for transmission through the lattice;

and means (9) to modulate the light output in accordance with the significance of said each section.

2. A display device according to Claim 1, wherein the signal for one picture comprises a sequence of words each one corresponding to the display information for a bi-stable light transmissive element (3), and the output means has means to take out, from the store (6), the first bit in each word and pass them sequentially to the lattice, and then to take out, from the store (6), the second bit in each word and pass them sequentially to the lattice, this operation being repeated until all the bits have been so processed.

3. A display device according to Claims 1 or 2, wherein the light modulation means (9) has means to regulate the intensity of the light output in accordance with the given bit-position, and/or means to regulate the duration of light output in accordance with the given bit-position.

4. A display device according to any one of the preceding claims, comprising means to blank the elements during setting of the elements (3) for a given bit position.

5. A display device according to any one of the preceding claims, comprising a lattice formed of groups of three bi-stable light transmissive elements (3), each of the elements (3) in a group producing a different colour and being set separately.

6. A display device according to Claim 5, wherein the lattice is formed of single bi-stable light transmissive elements (3), each of which is exposed to light of the three colours sequentially, a transmissive element being re-set after each exposure.

7. A display device according to any one of the preceding claims, wherein each row and column has a separate driver (8).

8. A display device according to any one of the preceding claims, wherein a bi-stable light transmissive element (3) comprises a selectively settable liquid crystal cell.

9. A method of operating a grey-scale display device (2) having a lattice of bi-stable light transmissive elements (3), the method comprising:-

inputting a signal representing the display information for one picture, to a store (6);

outputting from the store (6) a first section of the display information for one picture, the first section consisting of corresponding portions of display information for all the bi-stable light transmissive elements (3);

using a plurality of drivers (8), each allocated to a row or column of the lattice, to effect setting of each bi-stable light transmissive element (3) to a condition in accordance with its respective portion of the first section;

the method characterised by producing a light output for transmission through the lattice, once the bi-stable light transmissive elements are set, the light output being modulated in accordance with the significance of the first section;

outputting from the store (6) a second section of the display information, the second section consisting of corresponding other portions of display information for all the bi-stable light transmissive elements (3), and effecting the setting and modulating operations for the second section; and

repeating the outputting, setting and modulating operations on any further sections.

10. A method according to Claim 9, wherein the signal comprises an 8-bit word for each bi-stable light transmissive element (3), and the bits, of a predetermined significance, if the words are first output from the store for setting and display, and thereafter the bits, of another significance, of the words are output from the store for setting and display, and thereafter the bits, of another significance, of the words are output from the store (6) for setting and display, the total light output being of an appropriate ratio to the previous output, this sequence being repeated until all the bits have been displayed.

11. A method according to Claim 9 or 10 wherein modulation of the light output is achieved by regulation of the light intensity and/or of the duration of light output.

**Patentansprüche**

1. Anzeigevorrichtung (2) umfassend:

ein Gitter von bistabilen lichtdurchlässigen Anzeigeelementen (3);

Eingabemittel (5) zum Eingeben eines Signals, das die Anzeigeinformation für ein Bild darstellt, in einen Speicher (6);

Ausgabemittel, um aus dem Speicher (6) die Anzeigeinformation für ein Bild in Abschnitten auszugeben, wobei jeder Abschnitt aus entsprechenden Teilen der Anzeigeinformation für alle bistabilen lichtdurchlässigen Anzeigeelemente (3) besteht;

eine Vielzahl von Treibern (8), von denen jeder einer Reihe oder Spalte des Gitters zugeordnet ist, um jedes bistabile lichtdurchlässige Element (3) in einen Zustand gemäß seinem entsprechenden Teil von jedem Abschnitt zu versetzen;

wobei die Vorrichtung dadurch gekennzeichnet ist, daß sie Mittel (4) einschließt, um einen Lichtausgang zum Hindurchschicken durch das Gitter zu erzeugen, und daß Mittel (9) vorgesehen sind, um den Lichtausgang gemäß der Wertigkeit jedes Abschnitts zu modulieren.

2. Anzeigevorrichtung nach Anspruch 1, bei der das Signal für ein Bild eine Folge von Worten umfaßt, von denen jedes der Anzeigeinformation für ein bistabiles lichtdurchlässiges Element (3) entspricht, und wobei die Ausgabemittel Mittel aufweisen, um aus dem Speicher (6) das erste Bit jedes Wortes zu entnehmen und diese Bits der Reihe nach dem Gitter zuzuführen, und um dann aus dem Speicher (6) das zweite Bit jedes Wortes zu entnehmen und diese Bits der Reihe nach dem Gitter zuzuführen, und um diesen Vorgang zu wiederholen, bis alle Bits so verarbeitet worden sind.

3. Anzeigevorrichtung nach Anspruch 1 oder 2, bei der die Lichtmodulationsmittel (9) Mittel aufweisen, um die Intensität des Lichtausgangs gemäß der gegebenen Bit-Position zu regulieren, und/oder Mittel vorgesehen sind, um die Dauer des Lichtausgangs gemäß der gegebenen Bit-Position zu regulieren.

4. Anzeigevorrichtung nach einem der vorhergehenden Ansprüche, die Mittel umfaßt, um die Elemente während des Setzens der Elemente (3) für eine gegebene Bit-Position auszublen-

**5.** Anzeigevorrichtung nach einem der vorhergehenden Ansprüche, die ein Gitter enthält, das aus Gruppen von drei bistabilen lichtdurchlässigen Elementen (3) gebildet ist, wobei jedes der Elemente (3) in einer Gruppe eine unterschiedliche Farbe erzeugt und getrennt gesetzt wird.

**6.** Anzeigevorrichtung nach Anspruch 5, bei der das Gitter aus einzelnen bistabilen lichtdurchlässigen Elementen (3) gebildet wird, von denen jedes der Reihe nach Licht der drei Farben ausgesetzt wird, wobei ein lichtdurchlässiges Element nach jeder Belichtung zurückgestellt wird.

**7.** Anzeigevorrichtung nach einem der vorhergehenden Ansprüche, bei der jede Reihe und Spalte einen getrennten Treiber (8) hat.

**8.** Anzeigevorrichtung nach einem der vorhergehenden Ansprüche, bei der ein bistabiles lichtdurchlässiges Element (3) aus einer wahlweise setzbaren Flüssigkristallzelle besteht.

**9.** Verfahren zum Betrieb einer Grauskala-Anzeigevorrichtung, die ein Gitter von bistabilen lichtdurchlässigen Elementen (3) hat, umfassend:

Eingeben eines Signals, das die Anzeigeinformation für ein Bild darstellt, in einen Speicher (6);

Ausgeben eines ersten Abschnitts der Anzeigeinformation für ein Bild aus dem Speicher (6), wobei der erste Abschnitt aus entsprechenden Teilen der Anzeigeinformation für alle bistabilen lichtdurchlässigen Elemente (3) besteht;

Verwenden einer Vielzahl von Treibern (8), von denen jeder einer Reihe oder Spalte des Gitters zugeordnet ist, um das Setzen jedes bistabilen lichtdurchlässigen Elements (3) in einen Zustand gemäß seinem entsprechenden Teil des ersten Abschnitts zu bewirken;

wobei das Verfahren gekennzeichnet ist durch:

Erzeugen eines Lichtausgangs zum Hindurchschicken durch das Gitter, nachdem die bistabilen lichtdurchlässigen Elemente gesetzt sind, wobei der Lichtausgang gemäß der Wertigkeit des ersten Abschnitts moduliert wird;

Ausgeben eines zweiten Abschnitts der Anzeigeinformation aus dem Speicher, wobei der zweite Abschnitt aus entsprechenden anderen Teilen der Anzeigeinformation für alle bistabilen lichtdurchlässigen Elemente (3) besteht, und Bewirken der Setz- und Modulationsvorgänge für den zweiten Abschnitt; und

Wiederholen der Ausgabe-, Setz- und Modulationsvorgänge für alle weiteren Abschnitte.

**10.** Verfahren nach Anspruch 9, bei dem das Signal ein 8-Bit-Wort für jedes bistabile lichtdurchlässige Element (3) umfaßt, und bei dem erst die Bits der Worte mit einer vorgegebenen Wertigkeit zum Setzen und zur Anzeige aus dem Speicher ausgegeben werden, und danach die Bits der Worte mit einer anderen Wertigkeit zum Setzen und zur Anzeige aus dem Speicher (6) ausgegeben werden, und danach die Bits der Worte mit einer anderen Bedeutung zum Setzen und zur Anzeige aus dem Speicher (6) ausgegeben werden, wobei der gesamte Lichtausgang ein zweckmäßiges Verhältnis zum vorhergehenden Ausgang hat, und diese Folge wiederholt wird, bis alle Bits angezeigt worden sind.

**11.** Verfahren nach Anspruch 9 oder 10, bei dem die Modulation des Lichtausgangs durch Regulierung der Lichtintensität und/oder der Dauer des Lichtausgangs erzielt wird.

**Revendications**

**1.** Un dispositif d'affichage (2) comprenant :
   - un reseau d'éléments d'affichage émetteurs de lumière et bistables (3) ;
   - des moyens d'entrée (5) pour introduire un signal représentant l'information d'affichage pour une image dans une mémoire (6) ;
   - des moyens de sortie pour sortir de la mémoire (6) l'information d'affichage pour une image sous forme de sections, chaque section se composant de parties correspondantes de l'information d'affichage pour tous les éléments d'affichage (3), émetteurs de lumière et bistables ;
   - plusieurs moyens d'activation (8), affectés chacun à une rangée ou à une colonne du réseau, de façon à commuter chaque élément d'affichage (3), émetteur de lumière et bistable, dans une condition correspondant à sa partie respective dans chacune desdites sections;
   - le dispositif étant caractérisé en ce qu'il comprend des moyens (4) pour produire à sa sortie une lumière à transmettre par l'intermédiaire du réseau ;
   - et des moyens (9) pour moduler la lumière sortante en correspondance à l'importance de chacune desdites sections.

**2.** Un dispositif d'affichage selon la revendication 1, dans lequel le signal pour une image comprend une séquence de mots correspondant chacun à l'information d'affichage pour un élément émetteur de lumière bistable (3), et les moyens de sortie comprennent des moyens pour extraire de la mémoire (6) le premier bit de chaque mot et pour le transférer séquentiellement dans le réseau, puis pour extraire de la mémoire (6) le second bit de chaque mot et le transférer séquentiellement dans le réseau, cette opération étant répétée jusqu'à ce que tous les bits aient été ainsi traités.

**3.** Un dispositif d'affichage selon la revendication 1 ou 2, dans lequel les moyens de modulation de lumière (9) comprennent des moyens pour régler l'intensité de la lumière sortante en concordance avec la position de bit donnée, et/ou des moyens pour régler la durée de la lumière sortante en concordance avec la position de bit donnée.

**4.** Un dispositif d'affichage selon une quelconque des revendications précédentes, comprenant des moyens pour aveugler les éléments pendant une activation des éléments (3) correspondant à une position de bit donnée.

**5.** Un dispositif d'affichage selon une quelconque des revendications précédentes, comprenant un réseau formé de groupes de trois éléments émetteurs de lumière bistables (3), chacun des éléments (3) d'un groupe produisant une couleur différente et étant activé séparément.

**6.** Un dispositif d'affichage selon la revendication 5, dans lequel le réseau est formé d'éléments émetteurs de lumière bistables individuels (3), qui sont chacun exposés séquentiellement à une lumière formée des trois couleurs, un élément émetteur étant restauré après chaque exposition.

**7.** Un dispositif d'affichage selon une quelconque des revendications précédentes, dans lequel chaque rangée et chaque colonne comportent un moyen d'activation séparé (8).

**8.** Un dispositif d'affichage selon une quelconque des revendications précédentes, dans lequel un émetteur de lumière bistable (3) comprend une cellule à cristal liquide sélectivement activable.

**9.** Un procédé de commande d'un dispositif d'affichage à échelles de gris (2) comportant un réseau d'éléments émetteurs de lumière bistables (3), le procédé consistant à :
- introduire un signal représentant l'information d'affichage pour une image dans une mémoire (6) ;
- faire sortir de la mémoire (6) une première section de l'information d'affichage pour une image, la première section se composant de parties correspondantes de l'information d'affichage pour tous les éléments émetteurs de lumière bistables (3) ;
- utiliser plusieurs moyens d'activation (8), chacun affecté à une rangée ou une colonne du réseau, pour produire une activation de chaque élément émetteur de lumière bistable (3) dans une condition correspondant à sa partie respective de la première section ;
- le procédé étant caractérisé par les étapes consistant à :
- produire à la sortie une lumière à transmettre par l'intermédiaire du réseau, une fois que les éléments émetteurs de lumière bistables ont été activés, la lumière sortante étant modulée en correspondance à l'importance de la première section ;
- faire sortir de la mémoire (6) une seconde section de l'information d'affichage, la seconde section se composant d'autres parties correspondantes de l'information d'affichage pour tous les éléments émetteurs de lumière bistables (3), et effectuer les opérations d'activation et de modulation pour la seconde section ; et
- répéter les opérations de sortie, d'activation et de modulation pour d'autres sections.

**10.** Un procédé selon la revendication 9, dans lequel le signal comprend un mot de 8 bits pour chaque élément émetteur de lumière bistable, et les bits, d'une importance prédéterminée, des mots sont d'abord sortis de la mémoire (6) pour activation et affichage et ensuite les bits, d'une autre importance, des mots sont sortis de la mémoire (6) pour activation et affichage, la lumière totale sortante étant dans un rapport approprié avec la lumière sortante précédente, cette séquence étant répétée jusqu'à ce que tous les bits aient été affichés.

**11.** Un procédé selon la revendication 9 ou 10, dans lequel une modulation de la lumière sortante est réalisée par régulation de l'intensité lumineuse et/ou de la durée de la lumière sortante.

FIG.1

FIG. 2

FIG. 3